(19) 

Europäisches Patentamt

European Patent Office

Office européen des brevets

(11) **EP 4 245 522 A1**

(12) **EUROPEAN PATENT APPLICATION**
published in accordance with Art. 153(4) EPC

(43) Date of publication:
**20.09.2023 Bulletin 2023/38**

(21) Application number: **22740272.4**

(22) Date of filing: **27.01.2022**

(51) International Patent Classification (IPC):
**B32B 15/08** (2006.01)

(86) International application number:
**PCT/JP2022/003176**

(87) International publication number:
**WO 2023/144974 (03.08.2023 Gazette 2023/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mutsuki Electric Co., Ltd.**
**Osaka-shi, Osaka 544-0004 (JP)**

(72) Inventor: **SAI, Seiichi**
**Osaka-shi, Osaka 544-0004 (JP)**

(74) Representative: **Ricker, Mathias**
**Wallinger Ricker Schlotter Tostmann**
**Patent- und Rechtsanwälte Partnerschaft mbB**
**Zweibrückenstrasse 5-7**
**80331 München (DE)**

(54) **METAL MEMBER, METAL-RESIN BONDED BODY, AND METHOD FOR MANUFACTURING METAL-RESIN BONDED BODY**

(57) A metal-resin joined body having a high joining strength is obtained. The metal-resin joined body of the invention is a metal-resin joined body 10 including a metal member 30 made of a metal and a resin member 20 made of a thermoplastic resin, in which a resin joint surface 22 of the resin member 20 is joined to a metal joint surface 32 of the metal member 30. The metal member 30 includes an anchor portion 34 protruding from the met-al joint surface 32. The anchor portion 34 includes an aggregate 38 of a plurality of metal particles 36, and a plurality of voids 40 formed between the plurality of metal particles 36. The plurality of voids 40 are connected inside the anchor portion 34 and are connected from a surface of the anchor portion 34 to the inside of the anchor portion 34.

[Fig. 1]

10

EP 4 245 522 A1

**Description**

Technical Field

The present invention relates to a metal member, a metal-resin joined body, and a method for manufacturing a metal-resin joined body.

Background Art

A metal-resin joined body is known in which a metal member made of a metal and a resin member made of a synthetic resin are joined to each other. In the metal-resin joined body, in order to increase a joining strength between the metal member and the resin member, an anchor portion may be formed on a surface of the metal member to which the resin member is joined (metal joint surface).

For example, PTL 1 described below proposes that an anchor portion is formed on a metal joint surface of a metal member, and the anchor portion includes open holes each including an opening on a metal joint surface side of the metal member, an internal space including no opening on the metal joint surface side, and a tunnel connection channel that connects the open holes with the internal space or connects the open holes.

In addition, PTL 2 described below proposes that an anchor portion is formed on a metal joint surface of a metal member, and the anchor portion includes an uneven layer having an uneven shape and a metal porous layer formed on the uneven layer, in which a plurality of pores opened on the outermost surface of the metal porous layer are formed on the metal porous layer.

However, the open holes, the internal space, and the tunnel connection channel constituting the anchor portion are provided at a position recessed from the metal joint surface in PTL 1, and thus, even when the resin member is joined to the metal joint surface, the resin member is less likely to enter the open holes, the internal space, and the tunnel connection channel, and an anchor effect is not sufficiently exhibited.

In PTL 2, the metal porous layer is provided with elongated pores in which a diameter (width dimension) of the opening opened on the outermost surface of the metal porous layer is 100 nm or less, and thus, even when the resin member is joined to the metal joint surface, the resin member is less likely to enter the elongated pores, and the anchor effect is not sufficiently exhibited.

Citation list

Patent Literature

PTL 1: Japanese Patent No. 5998303
PTL 2: JP-A-2018-80360

Summary of Invention

Technical Problem

The invention is made in view of the above problems, and an object of the invention is to form an anchor portion that easily exhibits an anchor effect and to improve a joining strength of a metal-resin joined body in which a metal member and a resin member are joined.

Solution to Problem

According to the present embodiment, the following aspects [1] to [7] are provided.

[1] A metal member made of a metal, the metal member including a metal joint surface; and an anchor portion protruding from the metal joint surface, in which the anchor portion includes an aggregate of a plurality of metal particles, and a plurality of voids formed between the plurality of metal particles, and the plurality of voids are connected inside the anchor portion and are connected from a surface of the anchor portion to the inside of the anchor portion.

[2] The metal member according to [1] described above, in which the aggregate includes columnar metal particles one end of which is attached to the metal joint surface and the other end of which protrudes away from the metal joint surface.

[3] The metal member according to [1] or [2] described above, further including a recess depressed from the metal joint surface, in which the aggregate is provided in the recess such that a part of the aggregate protrudes from the metal joint surface.

[4] The metal member according to any one of [1] to [3] described above, in which the anchor portion is provided on the metal joint surface along a predetermined direction.

[5] A metal-resin joined body, including: a metal member made of a metal; and a resin member made of a thermoplastic resin, in which a resin joint surface of the resin member is joined to a metal joint surface of the metal member, the metal member includes an anchor portion protruding from the metal joint surface, the anchor portion includes an aggregate of a plurality of metal particles, and a plurality of voids formed between the plurality of metal particles, and the plurality of voids are connected inside the anchor portion and are connected from a surface of the anchor portion to the inside of the anchor portion.

[6] The metal-resin joined body according to [5] described above, in which the aggregate includes columnar metal particles one end of which is attached to the metal joint surface and the other end of which protrudes away from the metal joint surface.

[7] The metal-resin joined body according to [5] or [6] described above, in which the metal member includes a recess depressed from the metal joint surface, and the aggregate is provided in the recess such that a part of the aggregate protrudes from the metal joint surface.

[8] The metal-resin joined body according to any one of [5] to [7] described above, in which the anchor portion is provided on the metal joint surface along a predetermined direction.

[9] A method for manufacturing a metal-resin joined body in which a resin joint surface of a resin member made of a thermoplastic resin is joined to a metal joint surface of a metal member made of a metal, the method comprising: an anchor forming step of forming an anchor portion protruding from the metal joint surface on the metal member; and a joining step of, after the anchor forming step, bringing the metal joint surface into contact with the resin joint surface by pressurizing the resin member while bringing the resin member into contact with the anchor portion to cause the anchor portion to enter the resin member, in which in the anchor forming step, the anchor portion is formed by irradiating the metal joint surface with a pulse laser beam, the anchor portion being formed of an aggregate of a plurality of metal particles and including, between the plurality of metal particles, a plurality of voids connected from a surface of the anchor portion to an inside of the anchor portion.

[10] The method for manufacturing a metal-resin joined body according to [9] described above, in which the aggregate includes columnar metal particles one end of which is attached to the metal joint surface and the other end of which protrudes away from the metal joint surface.

Advantageous Effect

It is possible to form an anchor portion having a shape that easily exhibits an anchor effect and to improve a joining strength of a metal-resin joined body in which a metal member and a resin member are joined to each other.

Brief Description of Drawings

[FIG. 1] FIG. 1 is a cross-sectional view illustrating a schematic configuration of a metal-resin joined body according to an embodiment of the invention.

[FIG. 2] FIG. 2 is a plan view illustrating a schematic configuration of a metal joint surface of a metal member constituting the metal-resin joined body of FIG. 1.

[FIG. 3] FIG. 3 is a view illustrating a first step of a method for manufacturing the metal-resin joined body according to the embodiment of the invention.

[FIG. 4] FIG. 4 is a view illustrating a second step of the method for manufacturing the metal-resin joined body according to the embodiment of the invention.

[FIG. 5] FIG. 5 is an SEM photograph of a metal joint surface of a metal member of a first example.

[FIG. 6] FIG. 6 is an SEM photograph of a cross section perpendicular to a laser scanning direction of the metal member of the first example.

[FIG. 7] FIG. 7 is an SEM photograph of a cross section obtained by cutting an anchor portion of the metal member of the first example parallel to the laser scanning direction.

[FIG. 8] FIG. 8 is an SEM photograph of a cross section perpendicular to a laser scanning direction of a metal member of a first comparative example.

[FIG. 9] FIG. 9 is an SEM photograph of a cross section of a metal-resin joined body of the first example.

[FIG. 10] FIG. 10 is a component analysis image showing a distribution of aluminum in the cross section of FIG. 9.
[FIG. 11] FIG. 11 is a component analysis image showing a distribution of sulfur in the cross section of FIG. 9.
[FIG. 12] FIG. 12 is a component analysis image showing a distribution of silicon in the cross section of FIG. 9.

Description of Embodiments

The invention is not limited to the following embodiments. The following embodiments are presented as examples and are not intended to limit the scope of the invention. Novel embodiments can be implemented in other various forms. Various omissions, substitutions, and changes may be made without departing from the spirit of the invention. Hereinafter, the embodiments of the invention will be described with reference to the drawings. In the drawings, sizes and the like of members may be exaggerated for the sake of illustration.

(1) Metal-Resin Joined Body 10

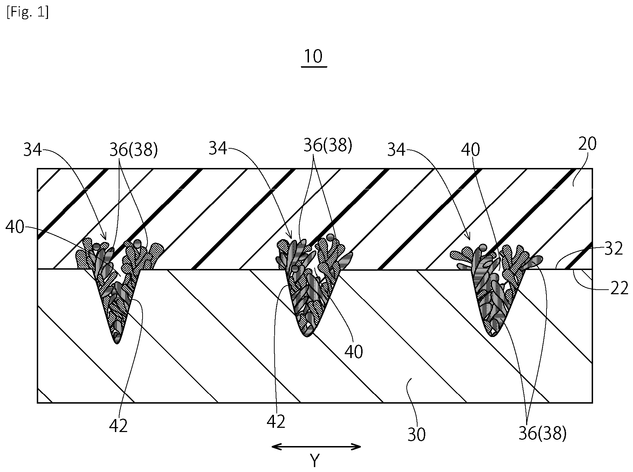

First, a metal-resin joined body 10 according to the present embodiment will be described. As illustrated in FIG. 1, the metal-resin joined body 10 includes a resin member 20 made of a thermoplastic resin and a metal member 30 made of a metal, in which a surface 22 of the resin member 20 (hereinafter, this surface may be referred to as a "resin joint surface") and a surface 32 of the metal member 30 (hereinafter, this surface may be referred to as a "metal joint surface") are joined to each other.

(2) Resin Member 20

The resin member 20 is a member obtained by molding a thermoplastic resin into a predetermined shape such as a block shape, a plate shape, and a line shape. In addition, the resin member 20 may be a coating film of the thermoplastic resin or an adhesive layer made of a thermoplastic resin adhesive. Specific examples of the thermoplastic resin constituting the resin member 20 include a polypropylene resin (PP resin), a polyacetal resin (POM resin), a polyphenylene sulfide resin (PPS resin), a poly-ether-ether-ketone resin (PEEK), an acrylonitrile/butadiene/styrene resin (ABS resin), a polyethylene resin (PE resin), a polybutylene terephthalate resin (PBT resin), a polyamide resin (PA resin) such as nylon 66 (PA66), an epoxy resin, a liquid crystal polymer (LCP resin), a modified polyphenylene ether resin (modified PPE), and a reactor soft polypropylene-based resin (metallocene-based reactor TPO resin). In addition, the resin member 20 may be a carbon fiber reinforced thermoplastic resin (CFRTP) obtained by blending carbon fibers with the thermoplastic resin as described above, or a resin obtained by blending a reinforcing material such as glass fibers and talc, a flame retardant, a deterioration inhibitor, an elastomer component, or the like with the thermoplastic resin as described above.

(3) Metal Member 30

The metal member 30 is a member obtained by molding a metal into a predetermined shape such as a block shape, a plate shape, and a line shape. The metal constituting the metal member 30 is not particularly limited, and various metals such as copper (Cu), iron (Fe), aluminum (Al), zinc (Zn), magnesium (Mg), tin (Sn), titanium (Ti), nickel (Ni), and chromium (Cr) can be used. In addition, the metal member 30 may be made of an alloy of two or more metals, such as a copper alloy, an iron alloy (steel material), an aluminum alloy, stainless steel, a titanium alloy, a nickel alloy, a chromium alloy, a zinc alloy, and a magnesium alloy, or an alloy of the above-described metals and a nonmetal such as silicon and carbon. The metal member 30 is preferably a metal or an alloy having a melt viscosity at a melting point of 5 mPa·s or less, such as aluminum, zinc, magnesium, tin, a Fe-Si alloy, a Cu-Sn alloy, or an Mg-Al alloy, from the viewpoint of easily forming an anchor portion 34 described later.
The shape of the metal member 30 may be a desired shape depending on an application or the like. Any method can be applied as a method for molding the metal member 30, and it is possible to use casting in which a melted metal or the like is poured into a mold having a desired shape, cutting performed by a machine tool or the like, punching performed by a press machine or the like, or the like.
A metal joint surface 32 of the metal member 30 is subjected to a roughening treatment and is provided with the anchor portion 34.
In addition, in the metal member 30, an oxide film (metal oxide) may be formed on the metal joint surface 32 or the anchor portion 34. The oxide film may be a natural oxide film naturally formed on the surface of the metal. In addition, the oxide film may be formed on the surface of the metal member 30 by a surface treatment with an oxidizing agent, an electrolytic treatment by anodic oxidation, a plasma oxidation treatment, a thermal oxidation treatment in an oxygen-containing gas, or the like.
As a preferred aspect, the oxide film may be formed on the surface of the metal member 30 by rapidly heating the surface of the metal member 30 in an atmosphere of an oxygen-containing gas such as air. The temperature rise of the surface of the metal member 30 per minute during the rapid heating is preferably equal to or higher than a melting point temperature of the metal constituting the metal member 30. By rapidly heating the surface of the metal member 30 in this manner, a dense oxide film can be formed on the surface of the metal member 30. Moreover, by rapidly heating the surface of the metal member 30, micro cracks are generated on the surface of the oxide film, and a joint area between the metal member 30 and the resin member 20 is increased.

The surface of the metal member 30 can be rapidly heated by various methods such as laser heating, induction heating, and resistance heating, and it is preferable to form the oxide film by heating the surface of the metal member 30 by irradiation with a laser beam because a temperature rise speed during the heating is fast and the temperature is easily controlled.

(4) Anchor Portion 34

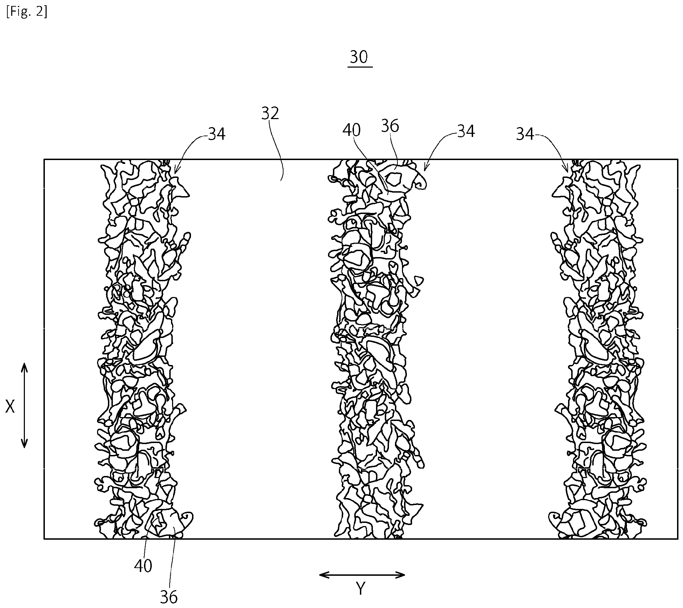

As illustrated in FIGS. 1 and 2, the anchor portions 34 each include an aggregate 38 of a plurality of metal particles 36 and a plurality of voids 40 formed between the plurality of metal particles 36 and is provided so as to protrude from the metal joint surface 32. The anchor portions 34 are provided along a predetermined direction (hereinafter, this direction is referred to as a first direction) X.

The aggregate 38 is three-dimensionally arranged such that the plurality of metal particles 36 come into contact with each another while the voids 40 are provided between the plurality of metal particles 36, and the plurality of metal particles 36 are fused at contact portions. The plurality of voids 40 provided in the anchor portion 34 are opened in various directions on the surface of the anchor portion 34 and connected inside the anchor portion 34, and are connected from the surface of the anchor portion 34 to the inside.

The plurality of metal particles 36 constituting the aggregate 38 are made of the same metal as the metal constituting the metal member 30. A particle diameter of the metal particles 36 is not particularly limited. For example, an average particle diameter of the metal particles 36 may be 5 $\mu$m to 50 $\mu$m. Here, the average particle diameter of the metal particles 36 is determined by obtaining an image by microscopic observation, measuring ten randomly selected particles in terms of a major axis diameter and a minor axis diameter (in the case where the long diameter and the short diameter are the same, a length in a certain axial direction and a length in an axial direction orthogonal thereto) of a metal particle 36 using the image, and calculating an average value thereof.

It is preferable that the aggregate 38 includes a plurality of columnar metal particles 36 one end of which is attached to the metal joint surface 32 and the other end of which protrudes away from the metal joint surface 32. A tip end of the columnar metal particles 36 is more preferably rounded.

The columnar metal particles 36 are metal particles 36 formed by re-solidifying a metal, which is melted by irradiating the metal joint surface 32 of the metal member 30 with a laser as described later, without scattering from the metal joint surface 32.

The aggregate 38 may include, in addition to the columnar metal particles 36, substantially spherical metal particles 36 formed by reattaching the melted metal scattered from the metal joint surface 32 by the irradiation with laser to the metal joint surface 32. In the aggregate 38, 60% or more of the metal particles 36 constituting the aggregate 38 are preferably the columnar metal particles 36.

Here, the columnar metal particles 36 mean metal particles 36 in which a length in a longitudinal direction of the metal particle 36 is twice or more a maximum diameter dimension of the metal particles 36. The maximum diameter dimension means a maximum dimension of a cross-sectional diameter in a cross section perpendicular to the longitudinal direction of the metal particles 36.

The length in the longitudinal direction and the maximum diameter dimension of the metal particles 36 can be measured using the image obtained by the microscopic observation. When the length in the longitudinal direction and the maximum diameter dimension are measured for each of ten metal particles 36 randomly selected and respective average values are regarded as an average length in the longitudinal direction and an average maximum diameter dimension, the average length in the longitudinal direction of the metal particles 36 may be 5 $\mu$m to 50 $\mu$m and the average maximum diameter dimension of the metal particles 36 may be 5 $\mu$m to 25 $\mu$m.

In addition, a ratio of the columnar metal particles 36 to the metal particles 36 constituting the aggregate 38 is calculated by randomly selecting 100 metal particles 36 from an image obtained by the microscopic observation and obtaining the number of the columnar metal particles 36 included in the 100 selected metal particles 36.

A minimum diameter of the opening of the voids 40 is preferably 0.1 $\mu$m or more, and more preferably 1 $\mu$m or more. When the minimum diameter of the opening of the voids 40 is 0.1 $\mu$m or more, the resin member 20 easily enters the inside of the voids 40, and when the minimum diameter of the opening of the voids 40 is 1 $\mu$m or more, the resin member 20 further easily enters the inside of the voids 40.

As a preferable aspect, the aggregate 38 of the plurality of metal particles 36 may be provided inside a recess 42 depressed from the metal joint surface 32, as illustrated in FIG. 1. The recess 42 may be a recessed groove extending along the first direction X, which has a depth of 5 μm to 200 μm from the metal joint surface 32 and a width of 5 μm to 200 μm at a position of the metal joint surface 32. When the aggregate 38 is provided inside the recess 42, the aggregate 38 is provided inside the recess 42 such that a part of the aggregate 38 protrudes from the metal joint surface 32.

In the present embodiment, as illustrated in FIG. 2, three anchor portions 34 are provided on the metal joint surface 32 at intervals in a direction (hereinafter, this direction is referred to as a second direction) Y perpendicular to the first direction X, and one anchor portion 34 may be provided on the metal joint surface 32, or any number of the anchor portions 34 may be provided on the metal joint surface 32 at intervals in the second direction Y. When a plurality of anchor portions 34 are provided on the metal joint surface 32, one anchor portion 34 may be parallel to the other anchor portions 34 as illustrated in FIG. 2, or may be provided so as to be inclined.

(5) Method for Manufacturing Metal-Resin Joined Body 10

Next, a method for manufacturing the metal-resin joined body 10 will be described.

First, the resin member 20 and the metal member 30 that are molded into predetermined shapes are prepared. Then, an anchor forming step for forming the anchor portions 34 on the metal joint surface 32 of the metal member 30 is executed. Thereafter, a joining step of joining the resin joint surface 22 of the resin member 20 to the metal joint surface 32 on which the anchor portions 34 are formed is performed. As a result, the metal-resin joined body 10 in which the resin member 20 is joined to the metal joint surface 32 of the metal member 30 is obtained. Hereafter, the anchor forming step and the joining step will be described in detail.

(5-1) Anchor Forming Step

In the anchor forming step, it is preferable to irradiate the metal joint surface 32 of the metal member 30 to which the resin member 20 is joined with a pulsed laser beam whose coefficient A represented by the following Formula (1) satisfies 0.1 or more and 1.0 or less while causing the pulsed laser to move (scan) beam in the first direction X.

$$A = LF/(1 - C) \quad \text{Formula (1)}$$

In Formula (1), L represents a spot diameter (mm) of the laser beam, F represents a fluence (J/mm2) of the laser beam, and C represents an overlap ratio between spots of the laser beam for scanning. The overlap ratio C is expressed by C = (L- d)/L, where d (mm) represents a spot interval of the laser beam (a distance between centers of adjacent laser spots).

When the metal joint surface 32 is irradiated with the pulsed laser beam having the coefficient A of 0.1 or more and 1.0 or less, the metal at a position irradiated with the laser beam is melted to form the recess 42, and the melted metal is deposited in the recess 42 in the form of particles to form the aggregate 38 of the metal particles 36.

When the anchor portion 34 is formed by radiating the laser beam as described above in the oxygen-containing gas, a metal oxide is formed on the surface of the metal particles 36 constituting the anchor portion 34.

In addition, when a plurality of anchor portions 34 are to be formed at intervals in the second direction Y, the metal joint surface 32 is irradiated with the pulsed laser beam while being scanned with the pulsed laser beam in the first direction X at positions spaced with a predetermined interval in the second direction Y.

Before the anchor portions 34 are formed by irradiating the metal joint surface 32 of the metal member 30 with the pulsed laser beam, a pretreatment may be performed to remove impurities attached to the metal joint surface 32 by irradiating, with a laser beam, a portion of the metal joint surface 32 where the anchor portion 34 is to be formed.

(5-2) Joining Step

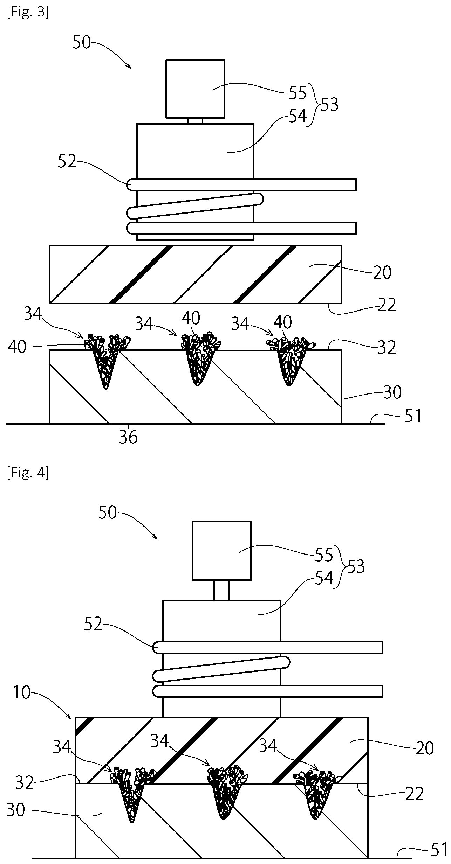

In the joining step, in a state where the metal member 30 and the resin member 20 are heated, the resin joint surface 22 is brought into contact with the metal joint surface 32 while being pressurized. As a result, the resin member 20 is joined to the metal joint surface 32 of the metal member 30, and the metal-resin joined body 10 is obtained. In the present embodiment, the first step and the second step are performed using a joining apparatus 50 as illustrated in FIGS. 3 and 4 to manufacture the metal-resin joined body 10.

The joining apparatus 50 includes a stage 51 on which the metal member 30 is to be placed, a heating device 52 that inductively heats the metal member 30 placed on the stage 51, and a press device 53 that pressurizes and joins the resin member 20 to the metal member 30.

The metal member 30 is placed on the stage 51 such that the metal joint surface 32 provided with the anchor portions 34 faces the resin member 20.

The heating device 52 includes an induction heating coil connected to a power source device (not shown), and when a driving power is received from the power source device, a magnetic field is generated from the induction heating coil to inductively heat the metal joint surface 32 of the metal member 30 placed on the stage 51.

The press device 53 includes a rod 54 formed of an insulator such as ceramics and a pressurization unit 55 that moves the rod 54 to press the resin member 20 against the metal joint surface 32 of the metal member 30. As illustrated in FIG. 3, the rod 54 may be inserted into a hollow portion of the induction heating coil of the heating device 52 and arranged to face the resin member 20. It is preferable that the pressurization unit 55 includes a pneumatic cylinder controlled by an electropneumatic regulator, a spring pressurizer, or the like, and is capable of controlling a speed at which the resin member 20 is moved together with the rod 54 and a pressure at the time of pressing the resin member 20 against the metal member 30.

In order to manufacture the metal-resin joined body 10 using the joining apparatus 50, first, in an atmosphere in which a gas is present, the metal member 30 is placed on the stage 51 such that the metal joint surface 32 provided with the anchor portions 34 faces the resin member 20 to be set later.

Next, the resin member 20 is arranged such that the resin joint surface 22 faces the metal joint surface 32 of the metal member 30 placed on the stage 51 with an interval therebetween. The interval between the metal joint surface 32 of the metal member 30 and the resin joint surface 22 of the resin member 20 is set to, for example, 0.001 mm to 10 mm.

Next, the heating device 52 is arranged so as to face the metal joint surface 32 of the metal member 30 with the resin member 20 interposed therebetween. In the case illustrated in FIG. 3, the heating device 52 is arranged above the resin member 20, and the resin member 20 is arranged between the heating device 52 and the metal member 30.

Next, the first step is executed to expose the resin joint surface 22 of the resin member 20 to a gas heated to a first temperature T1.

Specifically, the driving power is supplied to the heating device 52, and the magnetic field is generated from the induction heating coil provided in the heating device 52 to heat the metal joint surface 32 of the metal member 30. At this time, the driving power to be supplied to the heating device 52, a position of the induction heating coil provided in the heating device 52, and the like are adjusted so that the temperature of the metal joint surface 32 of the metal member 30 reaches the first temperature T1.

As the metal member 30 is heated as described above, the gas between the metal member 30 and the resin member 20 is heated to the first temperature T1. As a result, the resin joint surface 22 of the resin member 20, which faces the metal joint surface 32 of the metal member 30, is exposed to the gas heated to the first temperature T1, and the temperature of the resin joint surface 22 reaches the first temperature T1. The heating device 52 heats the metal joint surface 32 of the metal member 30 at a predetermined time S1 (for example, one second to ten seconds) to execute the first step described above, and then ends the first step to proceed to the second step.

When the first step is ended, in order to continuously execute the second step, the heating device 52 stops heating the metal member 30 or decreases a heating amount to decrease temperature (cool) until temperatures of the resin joint surface 22, the metal joint surface 32, and surroundings thereof (gas between the metal member 30 and the resin member 20) reach a second temperature T2. Then, the resin member 20 and the metal member 30 are joined to each other at the second temperature T2.

That is, in the second step, at a temperature lower than the first temperature T1 (the second temperature T2), the press device 53 moves the resin member 20 at a predetermined speed V and causes the resin member 20 to collide with the metal member 30. At this time, the resin member 20 is strongly pressed against the metal joint surface 32 of the metal member 30 while a position corresponding to the tip end of the rod 54 comes into contact with the anchor portions 34, and the resin member 20 is pressed against the metal member 30 at a predetermined pressure P. As a result, the anchor portions 34 enter the resin member 20 and the thermoplastic resin constituting the resin member 20 enters the voids 40 provided in the anchor portions 34. As a result, the metal-resin joined body 10 is obtained in which the anchor portions 34 are embedded in the resin member 20 while the voids 40 are filled with the thermoplastic resin, and the resin joint surface 22 of the resin member 20 and the metal joint surface 32 of the metal member 30 are locally (spot) joined. Then, the second step is ended.

Here, the first temperature T1 may refer to a temperature equal to or higher than a deflection temperature Tf under load when a load of 1.8 MPa is applied to the thermoplastic resin constituting the resin member 20. When the resin member 20 is made of a resin in which a reinforcing material such as carbon fibers, glass fibers, and talc are blended in the thermoplastic resin, the deflection temperature Tf under load when the load of 1.8 MPa is applied to the thermoplastic resin constituting the resin member 20 refers to a deflection temperature Tf under load when the load of 1.8 MPa is applied to the thermoplastic resin containing no reinforcing material.

An upper limit value of the first temperature T1 may be equal to or lower than a decomposition temperature of the thermoplastic resin constituting the resin member 20, that is, a temperature lower than a temperature at which the thermoplastic resin starts to be vaporized. For example, the upper limit value of the first temperature T1 may be 1000°C. Preferably, the upper limit value of the first temperature T1 may be set to a temperature 20°C higher than a melting point Tm of the thermoplastic resin constituting the resin member 20.

In addition, the second temperature T2 may be a temperature lower than the first temperature T1, and is preferably equal to or higher than the deflection temperature Tf under load when the load of 1.8 MPa is applied to the thermoplastic resin constituting the resin member 20. The second temperature T2 is preferably a temperature lower than the melting point Tm of the thermoplastic resin constituting the resin member 20. A temperature difference between the first temperature T1 and the second temperature T2 is preferably 1°C or higher and 20°C or lower. By joining the resin member 20 and the metal member 30 at the temperature lower than the melting point Tm of the thermoplastic resin constituting the resin member 20, it is possible to join the resin member 20 to the metal member 30 while preventing a deformation of the shape of the resin member 20.

In the present specification, the melting point Tm of thermoplastic resin is a value measured at a temperature rise speed of 10°C/min using a differential scanning calorimeter in accordance with JIS K7121. Examples of a melting point of a typical thermoplastic resin include 168°C for a polypropylene resin, 265°C for nylon 66, 232°C to 267°C for a polybutylene terephthalate resin, and 280°C for a polyphenylene sulfide resin.

In addition, the deflection temperature Tf under load of the thermoplastic resin is a deflection temperature under load when a load of 1.8 MPa is applied, which is measured by a method according to JIS K7191. Examples of a typical deflection temperature Tf under load when a load of 1.8 MPa is applied to the thermoplastic resin include 57°C to 65°C for a polypropylene resin, 66°C to 68°C for nylon 66, 58°C for a polybutylene terephthalate resin, and 105°C for a polyphenylene sulfide resin.

The first step is preferably executed in the oxygen-containing gas such as air. That is, it is preferable to heat the metal joint surface 32 and the resin joint surface 22 to the first temperature T1 in the atmosphere of the oxygen-containing gas and to expose the metal joint surface 32 and the resin joint surface 22 to the oxygen-containing gas heated to the first temperature T1.

When the first step is executed in the atmosphere of the oxygen-containing gas, the resin joint surface 22 of the resin member 20 reacts with oxygen contained in the oxygen-containing gas, and thereby functional groups that can be chemically bonded through a neutralization reaction with a basic or amphoteric oxide are generated on the resin joint surface 22 of the resin member 20.

Normally, the surface of the metal member 30 is covered with an oxide film made of a metal oxide obtained by oxidization, and thus the functional groups generated on the resin joint surface 22 are joined to the metal oxide present on the metal joint surface 32 of the metal member 30 by Van der Waals forces or hydrogen bonds. In addition, the resin member 20 and the metal member 30 are joined in a heated and pressurized state, and thereby the functional groups of the resin joint surface 22 and the metal oxide of the metal member 30 form a covalent bond by a neutralization reaction (dehydration condensation).

Examples of the functional groups generated on the resin joint surface 22 include at least one of a carboxyl group (-COOH), a carbonyl group (-CO-), and a hydroxy group (-OH) generated by oxidative decomposition of the thermoplastic resin constituting the resin member 20. In the case where the thermoplastic resin constituting the resin member 20 is a resin containing a sulfur atom (hetero atom) such as a polyphenylene sulfide resin (PPS), examples of the functional groups of the resin joint surface 22 include a functional group containing a hetero atom, such as a sulfone group ($-SO_3H$), a sulfonyl group ($-SO_2-$), a sulfanyl group (-SH), or a disulfide group (-SS-), in addition to a carboxyl group, a carbonyl group, or a hydroxy group.

As an example of the neutralization reaction caused by the joining of the metal member 30 and the resin member 20, a neutralization reaction represented by the following formula (2) occurs when the resin joint surface 22 has a carboxyl group (R-COOH) as the functional group, and the metal member 30 is made of a divalent metal.

$$2(R\text{-}COOH) + MeO = 2(R\text{-}COO)\text{-}Me + H_2O\uparrow \qquad (2)$$

In Formula (2), R is a main chain of the thermoplastic resin constituting the resin member 20, and Me is a metal constituting the metal member 30.

When the first step is executed in the atmosphere of the oxygen-containing gas, the second temperature T2 is preferably a temperature at which the functional groups of the resin joint surface 22 of the resin member 20 and the metal oxide formed on the metal joint surface 32 of the metal member 30 can form a covalent bond by the neutralization reaction. In addition, the second temperature T2 is preferably a temperature at which water generated by the neutralization reaction is removed from a reaction system. The second temperature T2 varies depending on a type of the functional groups and the metal oxide, and thus it is difficult to unconditionally define the second temperature T2. However, it is more preferable that the second temperature T2 is 100°C or higher because the water generated by the neutralization reaction is easily removed.

In the first step, the metal member 30 and the resin member 20 may be heated such that temperatures of both the metal member 30 and the resin member 20 reach the first temperature T1, and the metal member 30 and the resin member 20 may be heated such that the temperature of at least one of the metal joint surface 32 and the resin joint surface 22 reaches the first temperature T1.

In the second step, the pressure P at the time of pressing the resin member 20 against the metal member 30 is preferably a pressure equal to or higher than a compressive yield stress of the thermoplastic resin constituting the resin member 20. The pressure P varies depending on the thermoplastic resin constituting the resin member 20, and thus it is difficult to unconditionally define the pressure P. However, the pressure P is preferably 10 MPa to 100 MPa.

The case where the press device 53 moves the resin member 20 toward the metal member 30 has been described in the present embodiment, and the metal member 30 may be moved toward the resin member 20.

When the metal member 30 and the resin member 20 are locally joined to each other as described in the present embodiment, a planar shape of a joining portion may be any shape such as a dot shape, a line shape, and a planar shape.

The case where the metal member 30 and the resin member 20 is locally pressurized and joined has been described in the present embodiment, and the resin member 20 and the metal member 30 may be joined over a wide range, for example, by pressurizing the entire surfaces of the resin joint surface 22 and the metal joint surface 32.

In the present embodiment, when the resin member 20 is pressed against the metal member 30, the temperatures of the resin member 20, the metal member 30, and the surroundings thereof may be maintained at the second temperature T2. Alternatively, the resin member 20 may be kept in contact with the metal member 30 in a pressurized state until the temperatures of the resin member 20, the metal member 30, and the surroundings thereof are reduced to a temperature equal to or lower than a predetermined temperature. In this case, it is preferable that the resin member 20 is brought into contact with the metal member 30 in the pressurized state until the temperatures of the resin member 20, the metal member 30, and the surroundings thereof are reduced to a temperature equal to or lower than a glass transition temperature Tg of the thermoplastic resin constituting the resin member 20.

The case where the resin member 20 molded into a predetermined shape in advance is press-joined to the metal member 30 while being heated has been described as the joining step in the present embodiment, and the resin member 20 may be joined to the metal member 30 by inserting the metal member 30 on which the anchor portions 34 are formed into an injection mold and injecting a melted synthetic resin material toward the metal joint surface 32 in the injection mold.

(6) Effects

In the metal-resin joined body 10 of the present embodiment, the thermoplastic resin constituting the resin member 20 enters the voids 40 when the resin member 20 is joined to the metal member 30, so that a high anchor effect can be exhibited and the joining strength between the resin member 20 and the metal member 30 can be increased.

In the present embodiment, the anchor portions 34 protrude from the metal joint surface 32 and the plurality of voids 40 are formed between the plurality of three-dimensionally arranged metal particles 36, and thus relatively large openings are opened in various directions in the surfaces of the anchor portions 34. Therefore, in the present embodiment, the thermoplastic resin constituting the resin member 20 easily enters the voids 40, and the joining strength can be improved. In particular, even when the resin member 20 and the metal member 30 are joined to each other at the second temperature T2 lower than the melting point Tm of the thermoplastic resin constituting the resin member 20, the thermoplastic resin constituting the resin member 20 can enter the voids 40, and the joining strength can be improved while preventing the shape deformation of the resin member 20.

In addition, when a part of the plurality of metal particles 36 constituting the anchor portion 34 are the columnar metal particles 36 one end of which is attached to the metal joint surface 32 and the other end of which protrudes away from the metal joint surface 32, the metal particles 36 easily bite into the inside of the resin member 20. Therefore, the high anchor effect is exhibited by the anchor portions 34, and the joining strength can be improved.

When the aggregate 38 constituting the anchor portions 34 is provided in the recess 42 depressed from the metal joint surface 32 as described in the present embodiment, the voids 40 can be extended deep into the anchor portion 34, and the joining strength can be improved.

In the present embodiment, when the metal oxide is formed on the surfaces of the anchor portions 34, the functional groups of the resin joint surface 22 of the resin member 20 are bonded to the metal oxide of the anchor portions 34 by a dipole interaction. In addition, the functional groups of the resin joint surface 22 and the metal oxide form the covalent bond by the neutralization reaction (dehydration condensation). Therefore, the joining strength of the metal-resin joined body 10 can be increased.

(Examples)

Hereinafter, first to third examples and first to third comparative examples of the invention will be described. However, the invention is not limited to the first to third examples.

In the first to third examples and the first to third comparative examples, by irradiation with a single-mode laser having a laser wavelength of 1064 nm and a pulse width of 0.2 $\mu$sec, anchor portions each having a length of 18 mm were formed at a pitch of 0.2 mm on a metal joint surface of a metal member made of aluminum (Al 1050). Then, a resin member was joined to the metal joint surface on which the anchor portions were formed. In the first to third examples, the irradiation was performed with a laser having the above-described coefficient A of 0.53 J/mm, and in the first to third comparative examples, the irradiation was performed with a laser having the above-described coefficient A of 0.08 J/mm.

Details of the resin member, a dimension of the metal member, a dimension of the resin member, and a joint area (overlapping area) between the resin members and the metal members used in the first to third examples and the first to third comparative examples are as follows. In the resin member of the first example and the first comparative example, glass fibers are blended as a reinforcing material.

- PPS resin: SUSTEEL (registered trademark) SGX120
- Modified 6T nylon resin: ARLEN (registered trademark) A350
- PPS resin: NOVATEC (registered trademark) HG30U
- Dimension of the metal member: 18 mm × 45 mm × 1.6 mm
- Dimension of the resin member: 10 mm × 40 mm × 3.0 mm
- Joint area between the metal member and the resin member: 10 mm × 5 mm

An evaluation method is as follows.

(a) SEM Observation of Anchor Portion

For the metal member of the first example and the first comparative example in which the anchor portions were formed on the metal joint surface, SEM observation of the anchor portion was performed in a state in which the resin member 20 was not joined. When the anchor portion including an aggregate of a plurality of metal particles and a plurality of voids formed between the plurality of metal particles was formed so as to protrude from the metal joint surface, the anchor portion was evaluated as a good anchor portion and represented by "A", and when such an anchor portion was not formed, the anchor portion was evaluated as a poor anchor portion and represented by "B".

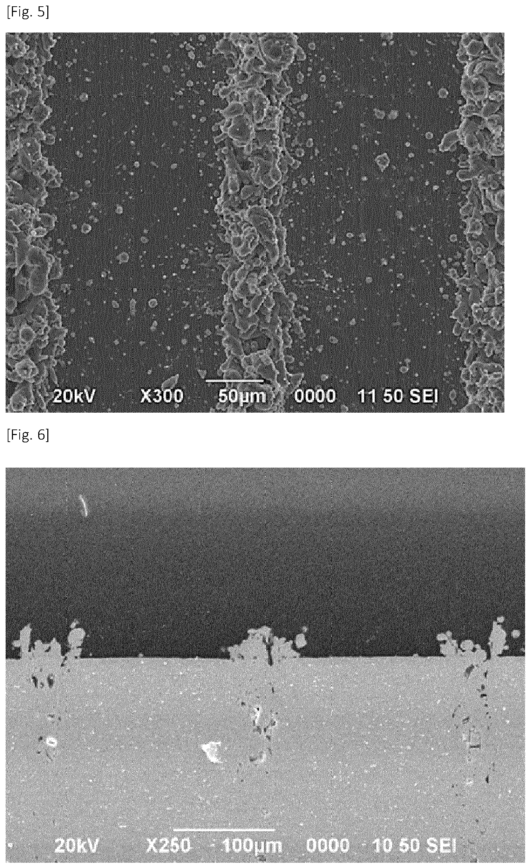

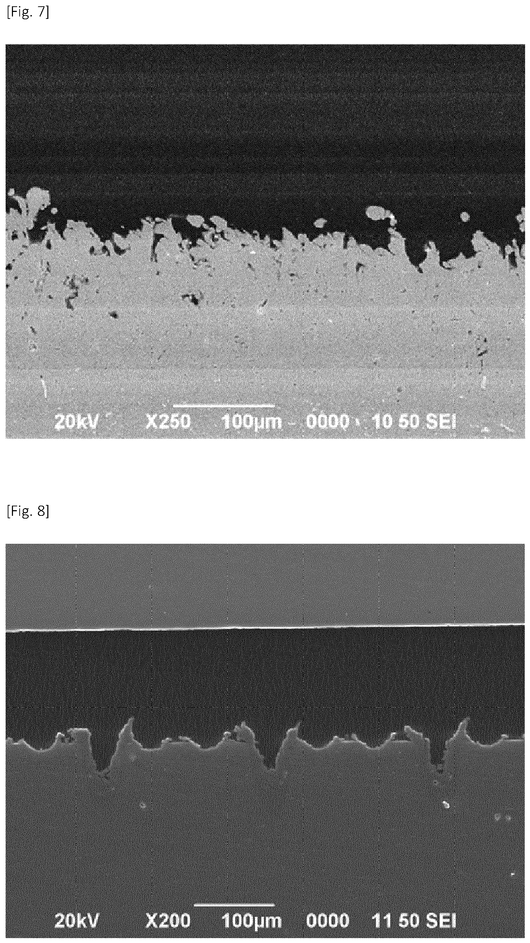

Results are shown in Table 1 and FIGS. 5 to 8. FIG. 5 is an SEM photograph of the metal joint surface of the metal member of the first example. FIG. 6 is an SEM photograph of a cross section perpendicular to a laser scanning direction (longitudinal direction of the anchor portion) of the metal member of the first example. FIG. 7 is an SEM photograph of a cross section obtained by cutting the anchor portion of the metal member of the first example parallel to the laser scanning direction. FIG. 8 is an SEM photograph of a cross section perpendicular to a laser scanning direction of the metal member of the first comparative example.

As illustrated in FIGS. 5 to 7, in the metal member of the first example, the anchor portion was formed so as to protrude from the metal joint surface. The anchor portion includes an aggregate of a plurality of metal particles including columnar metal particles one end of which is attached to the metal joint surface and the other end of which protrudes away from the metal joint surface, and a plurality of voids formed between the plurality of metal particles. In contrast, in the metal member of the first comparative example, as illustrated in FIG. 8, recesses depressed from the metal joint surface were formed, but the anchor portion including the aggregate of the plurality of metal particles and the plurality of voids formed between the plurality of metal particles was not formed.

(b) Joining Strength

The joining strength was measured using a tensile tester (Shimadzu Corporation, Autograph AGX-V) at a tensile speed of 10 mm/min and a measurement temperature of 25°C in accordance with a test method specified in JIS K6850 in which the dimension of the metal member, the dimension of the resin member, and the joint area between the resin member and the metal member were changed as described above and other conditions were based on the same standard. Four test pieces were prepared for each of the first to third examples and the first to third comparative examples, and an average value of four measured values was defined as a joining strength of each test piece.

[Table 1]

|  | Metal member | Synthetic resin member | Anchor portion | Joining strength (Mpa) |
|---|---|---|---|---|
| First Example | Al 1050 | PPS | A | 28.4 |
| Second Example | Al 1050 | Modified 6T nylon resin | - | 34.8 |
| Third Example | Al 1050 | PP | - | 19.9 |
| First Comparative Example | Al 1050 | PPS | B | 22.3 |
| Second Comparative Example | Al 1050 | Modified 6T nylon resin | - | 24.7 |

(continued)

|  | Metal member | Synthetic resin member | Anchor portion | Joining strength (Mpa) |
|---|---|---|---|---|
| Third Comparative Example | Al 1050 | PP | - | 13.2 |

The results are as shown in Table 1. For the PPS resins, the modified 6T nylon resins, and the PP resins, it has been confirmed that the joining strength was improved in the first to third examples as compared with the first to third comparative examples.

(c) Elemental Analysis based on Energy Dispersive X-Ray Spectrometry (EDS)

With respect to the metal-resin joined body of the first example, an image of a cross section was taken using JSM-6390A manufactured by JEOL Ltd., and an elemental analysis based on EDS was performed.

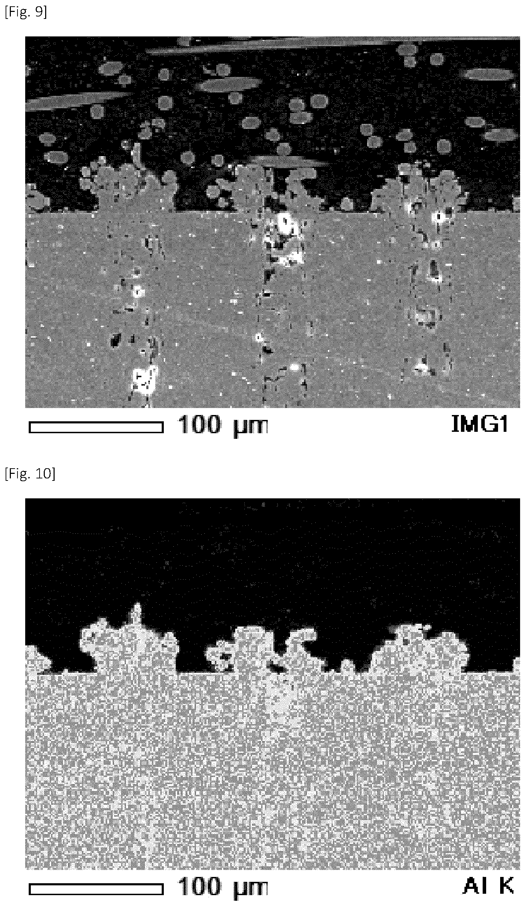

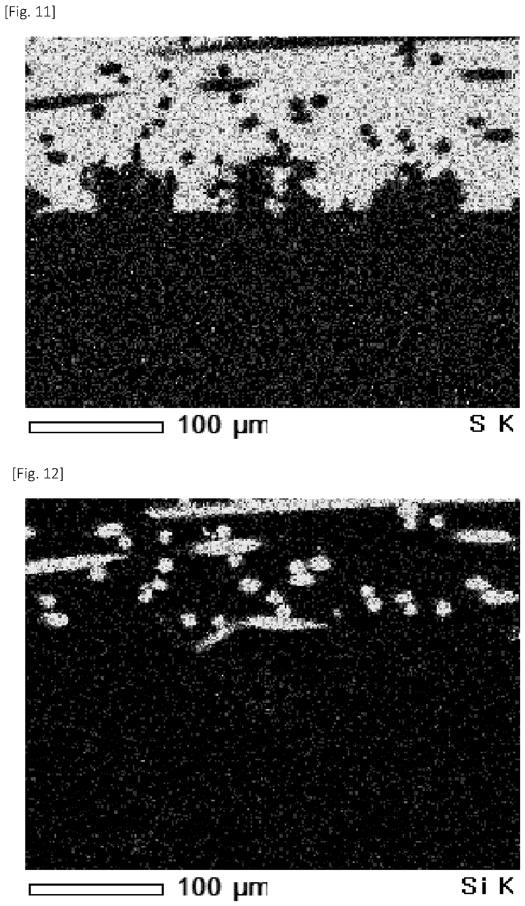

Results are as shown in FIGS. 9 to 12. In FIG. 9, bright portions present in the resin member (dark region in an upper part of FIG. 9) indicate glass fibers contained in the resin member. FIG. 10 shows that aluminum is present in a white region. FIG. 11 shows that sulfur contained in PPS is present in a white region. FIG. 12 shows that silicon contained in glass fibers is present in a white region.

As can be seen from FIGS. 9 to 12, the sulfur was present in void portions of an aggregate of aluminum particles without breaking protrusion shapes of the aluminum particles constituting the anchor portion. From this matter, it has been confirmed that the aluminum particles bit into the inside of the resin member to exhibit the anchor effect, and the PPS resin that entered the void portions exhibited the anchor effect.

Reference Sign List

10 metal-resin joined body
20 resin member
22 resin joint surface
30 metal member
32 metal joint surface
34 anchor portion
36 metal particle
38 aggregate
40 void
42 recess

Claims

1. A metal member made of a metal, the metal member comprising:

   a metal joint surface; and
   an anchor portion protruding from the metal joint surface, wherein
   the anchor portion includes an aggregate of a plurality of metal particles, and a plurality of voids formed between the plurality of metal particles, and
   the plurality of voids are connected inside the anchor portion and are connected from a surface of the anchor portion to the inside of the anchor portion.

2. The metal member according to claim 1, wherein
   the aggregate includes columnar metal particles one end of which is attached to the metal joint surface and the other end of which protrudes away from the metal joint surface.

3. The metal member according to claim 1 or 2, further comprising:

   a recess depressed from the metal joint surface, wherein
   the aggregate is provided in the recess such that a part of the aggregate protrudes from the metal joint surface.

**4.** The metal member according to any one of claims 1 to 3, wherein
the anchor portion is provided on the metal joint surface along a predetermined direction.

**5.** A metal-resin joined body, comprising:

a metal member made of a metal; and
a resin member made of a thermoplastic resin, wherein
a resin joint surface of the resin member is joined to a metal joint surface of the metal member,
the metal member includes an anchor portion protruding from the metal joint surface,
the anchor portion includes an aggregate of a plurality of metal particles, and a plurality of voids formed between the plurality of metal particles, and
the plurality of voids are connected inside the anchor portion and are connected from a surface of the anchor portion to the inside of the anchor portion.

**6.** The metal-resin joined body according to claim 5, wherein
the aggregate includes columnar metal particles one end of which is attached to the metal joint surface and the other end of which protrudes away from the metal joint surface.

**7.** The metal-resin joined body according to claim 5 or 6, wherein

the metal member includes a recess depressed from the metal joint surface, and
the aggregate is provided in the recess such that a part of the aggregate protrudes from the metal joint surface.

**8.** The metal-resin joined body according to any one of claims 5 to 7, wherein
the anchor portion is provided on the metal joint surface along a predetermined direction.

**9.** A method for manufacturing a metal-resin joined body in which a resin joint surface of a resin member made of a thermoplastic resin is joined to a metal joint surface of a metal member made of a metal, the method comprising:

an anchor forming step of forming an anchor portion protruding from the metal joint surface on the metal member; and
a joining step of, after the anchor forming step, bringing the metal joint surface into contact with the resin joint surface by pressurizing the resin member while bringing the resin member into contact with the anchor portion to cause the anchor portion to enter the resin member, wherein
in the anchor forming step, the anchor portion is formed by irradiating the metal joint surface with a pulse laser beam, the anchor portion being formed of an aggregate of a plurality of metal particles and including, between the plurality of metal particles, a plurality of voids connected from a surface of the anchor portion to an inside of the anchor portion.

**10.** The method for manufacturing a metal-resin joined body according to claim 9, wherein
the aggregate includes columnar metal particles one end of which is attached to the metal joint surface and the other end of which protrudes away from the metal joint surface.

[Fig. 1]

<u>10</u>

[Fig. 2]

[Fig. 3]

[Fig. 4]

[Fig. 5]

[Fig. 6]

[Fig. 7]

[Fig. 8]

[Fig. 9]

100 μm                    IMG1

[Fig. 10]

100 μm                    Al K

[Fig. 11]

[Fig. 12]

# EP 4 245 522 A1

## INTERNATIONAL SEARCH REPORT

International application No.

**PCT/JP2022/003176**

### A. CLASSIFICATION OF SUBJECT MATTER

***B32B 15/08*** (2006.01)i
FI: B32B15/08 A

According to International Patent Classification (IPC) or to both national classification and IPC

### B. FIELDS SEARCHED

Minimum documentation searched (classification system followed by classification symbols)

B32B15/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 5953559 B1 (KISO KK) 20 July 2016 (2016-07-20) claims, paragraphs [0011]-[0052], fig. 1-11 | 1-10 |
| A | JP 2013-71312 A (HITACHI AUTOMOTIVE SYSTEMS LTD) 22 April 2013 (2013-04-22) paragraphs [0021]-[0080], fig. 1, 5, 10 | 1-10 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 March 2022** | **05 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/003176**

| Patent document cited in search report | | | Publication date (day/month/year) | Patent family member(s) | | | Publication date (day/month/year) |
|---|---|---|---|---|---|---|---|
| JP | 5953559 | B1 | 20 July 2016 | JP 2016-130003 A claims, paragraphs [0011]-[0052], fig. 1-11 | | | |
| JP | 2013-71312 | A | 22 April 2013 | US 2013/0078423 A1 paragraphs [0041]-[0115], fig. 1, 5, 10 EP 2574441 A1 paragraphs [0024]-[0098], fig. 1, 5, 10 CN 103036086 A whole document | | | |

Form PCT/ISA/210 (patent family annex) (January 2015)

**EP 4 245 522 A1**

**REFERENCES CITED IN THE DESCRIPTION**

**Patent documents cited in the description**

- JP 5998303 B

- JP 2018080360 A